# EUROPÄISCHE PATENTSCHRIFT

(11) **EP 2 948 651 B1**
(45) Veröffentlichungstag und Bekanntmachung des Hinweises auf die Patenterteilung: **13.12.2017**
(21) Anmeldenummer: 14700683.7
(22) Anmeldetag: 16.01.2014
(51) Int. Cl.: F01L 9/02

(54) **VARIABLE ELEKTROHYDRAULISCHE VENTILSTEUERUNG**
VARIABLE ELECTROHYDRAULIC VALVE DRIVE
COMMANDE ELECTROHYDRAULIQUE VARIABLE DE SOUPAPE

(30) Priorität: 22.01.2013 DE 102013100632
(43) Veröffentlichungstag der Anmeldung: 02.12.2015
(73) Patentinhaber: LSP INNOVATIVE AUTOMOTIVE SYSTEMS GMBH, 85774 Unterföhring (DE)
(72) Erfinder: LEIBER, Heinz, 71739 Oberriexingen (DE); LEIBER, Thomas, 81675 München (DE); KELLER, Jochen, 80469 München (DE); KRAUSE, Lars, 85375 Neufahrn bei Freising (DE)
(74) Vertreter: Lenzing Gerber Stute
(86) Internationale Anmeldenummer: PCT/EP2014/050784
(87) Internationale Veröffentlichungsnummer: WO 2014/114552

(56) Entgegenhaltungen:
- EP-A2- 1 273 770
- DE-A1-102008 019 815
- FR-A- 432 425
- JP-A- S59 160 019
- US-A- 4 716 863
- US-A1- 2002 069 841
- US-A1- 2003 221 663
- US-A1- 2010 024 752
- US-A1- 2011 277 712
- US-B1- 6 886 511

## Beschreibung

Die vorliegende Erfindung betrifft eine variable elektrohydraulische Ventilsteuerung nach dem Oberbegriff des Patentanspruchs 1.

### Stand der Technik

Derartige Ventilsteuerungen werden z. B. für die Steuerung von Gaswechselventilen von Kraftfahrzeugen verwendet. Man unterscheidet prinzipiell mechanische bzw. elektro-mechanische Ventilsteuerungen und hydraulische bzw. elektro-hydraulische Ventilsteuerungen.

Variable Ventiltriebe bzw. Ventilsteuerungen gewinnen mehr und mehr an Bedeutung. Insbesondere für Otto- oder Dieselverbrennungsmotoren ist eine zunehmende Variabilität erforderlich, insbesondere zur Reduzierung der Abgasemissionen und des Kraftstoffverbrauches. Existierende Systeme sind eingeschränkt in Variabilität, zu aufwändig bzw. haben zu hohe Verluste durch einen schlechten Wirkungsgrad und sind zu ungenau in der Steuerung.

So ist z.B. aus der WO 2008/107111 A1 eine elektro-mechanische Ventilsteuerung mit Nockenwellenverstellung bekannt. Da bei dieser Ventilsteuerung die Ventilhubprofile über Nockenwellen-Konturen vorgegeben sind, weist sie eine eingeschränkte Variabilität auf, da hier eine Wahl zwischen zwei Ventilhubprofilen zu treffen ist.

Aus der DE 10 2006 013 100 A1 ist ein Segmentmotor für einen Ventiltrieb bekannt, mit dem durch verbesserte Verstellmöglichkeiten des Ventilhubes die Variabilität erweitert werden kann, wobei jedes Ventil wird über einen elektromechanischen Segmentmotor angesteuert wird mit einer Endstufe/Aktor. Dies ist ein vollvariables System, bei dem Hub und Steuerzeit variiert werden kann. Allerdings weist diese Lösung ein relativ hohes Gewicht auf und ist vergleichsweise teuer. Ferner benötigt es einen hohen Regelungstechnikaufwand zur Sicherstellung niedriger Aufsetzgeschwindigkeiten und einen großen Aufwand für Ventilausfall. Die EP 1 691 041 A2 zeigt eine elektro-hydraulische Ventilsteuerung der eingangs genannten Art. Bei dieser relativ einfachen variablen Ventilsteuerung wirkt die Nockenwelle auf ein hydraulisches System. Ein ähnliches, hinsichtlich der Ausfallsicherheit verbessertes System ist aus der DE 10 2008 049 181 A1 bekannt. Auch bei diesen Lösungen ist die Variabilität noch eingeschränkt, da Profile kleiner als Nockenwellenform und die Ventilschließprofile an das Nockenwellenprofil gekoppelt sind. Zudem ist die Steuerzeitenvariabilität (Öffnungs- und Schließersteuerzeitenwinkelvariation) eingeschränkt. Ferner besteht bei diesen Systemen ein relativ hoher Leistungsbedarf und einer unzureichenden Genauigkeit. Eine Lösung zur Entlüftung des Systems ist nicht vorgesehen.

Aus der US 6886511 B1 ist eine elektro-hydraulische Ventilsteuerung bekannt. Zur Einstellung des Ventilhubes des Gaswechselventils dient ein Kolben der ebenfalls die Hydraulikkammer begrenzt und welcher mittels eines Schrittmotors auf und ab verstellbar ist. Der Schrittmotor verstellt dabei jeweils nur einen Kolben eines Ventils.

### Aufgabe und Lösung der Erfindung

Der Erfindung liegt die Aufgabe zugrunde, eine variable Ventilsteuerung der eingangs genannten Art dahingehend zu verbessern, dass bei relativ geringem Aufwand eine volle Variabilität (Ventilhub und Steuerzeiten) erreicht wird.

Diese Aufgabe wird erfindungsgemäß mit den Merkmalen des Patentanspruches 1 gelöst.

Mit der erfindungsgemäßen Lösung wird eine Einrichtung und ein Verfahren zur voll variablen Ventilsteuerung geschaffen, die eine genaue Regelung und überdies eine hohe Ventilsteuergenauigkeit ermöglicht. Die Variabilität betrifft insbesondere die Hubvariation, wobei die Ventilhübe größer oder kleiner als die Nockenwellenkontur sein können und die Steuerzeitenvariation. Es sind z.B. Leistungssteigerungen bei Volllast durch Hubvergrößerung im Vergleich zur Nockenwelle möglich. Die Variabilität wird mit einer zentralen vorzugsweise elektromotorischen Plungereinheit geschaffen, welche das Volumen der Ventilhydraulikkammer zur Ventilsteuerung variiert. Diese Einheit kann zentral für alle Ventilsteuerungen (Einlass- und Auslassventile) für Verbrennungsmotoren mit vier oder mehr Zylindern verwendet werden.

Die Vorteile der Erfindung lassen sich mit geringem Gewicht und Bauraum und geringen Kosten erreichen. So genügen beispielsweise nur vier Ventile und eine Plungerantriebseinheit für den Betrieb eines Vier-Zylindermotors, bei dem die Einlassventile variabel gestaltet sind und zwei Ventile zusammengefasst sind mit einer Hydraulikkammer.

Ferner zeichnet die Erfindung ein niedriger Leistungsbedarf aus, was einen Betrieb mit 12V (Standardbordnetz) ermöglicht, sowie eine hohe Verfügbarkeit (Notbetrieb bei Ausfall von Komponenten).

Vorteilhafte Ausführungsformen und Weiterbildungen der Erfindung ergeben sich aus den weiteren Patentansprüchen.

Mit der Erfindung bzw. ihren vorteilhaften Ausführungen und Weiterbildungen ergeben sich ferner insbesondere folgende weitere Vorteile:
- ein geräuscharmer Betrieb, da die Nockenwellenkontur den Schließvorgang regelt (keine hohen Anforderungen an Regelung zur Erreichen von niedrigen Ventilaufsetzgeschwindigkeiten);
- eine Regelung ohne Ventilhubsensor ist möglich, da die Nockenwelle Schließvorgang regelt.
- eine deutlich höhere Genauigkeit der Ventilhubregelung gegenüber anderen hydraulischen Ventilsteuerung und Möglichkeit der Realisierung von Minihüben, da Ventilregelung deutlich präziser mit Motorpositionsregelung im Vergleich zu Zeitsteuerung von Ventilen;
- eine sehr einfache Zylinderabschaltung durch Trennung Nockenwelle von der Hydraulikkammer mit nur einem Ventil pro Nockenwelle. Damit ist u.a. eine weitere Reduzierung des Kraftstoffverbrauchs möglich, da z.B in Fahrsituationen mit niedrigem Leistungsbedarf kein Kraftstoff in den bzw. die abgeschalteten Zylinder eingespritzt wird, wobei die Ventile der abgeschalteten Zylinder zweckmäßig geschlossen gehalten werden, um Gaswechselverluste zu vermeiden. Je nach System bzw. Bedarf können dabei einzelne Zylinder oder Zylinderkombinationen abgeschaltet werden. Die Zylinderabschaltung kann im Vergleich zu mechanischen Systemen zudem viel schneller erfolgen;
- zudem wird eine einfache Lösung zur Entlüftung des Systems aufgezeigt;
- weitere vorteilhafte Ausführungen betreffen den Notbetrieb bei Systemausfall, Leckageausgleich des Systems, die Einhaltung eines Mindestdruckniveaus in den Ventilhydraulikkammern, eine aktive Entlüftungsprozedur, sowie weitere zweckmäßige Vorgehensweisen zur Vollabschaltung der Ventile.

Ausführungsbeispiele der Erfindung und ihrer Ausgestaltungen, sowie weitere Merkmale und Vorteile ergeben sich aus der nachfolgenden Beschreibung und der Zeichnung auf die Bezug genommen ist.

Es zeigen:
- Fig. 1:: den prinzipiellen Aufbau der Ventilsteuerung;
- Fig. 1a:: einen Linearaktuator als Alternative zum Motor-Gewindetrieb;
- Fig. 1b:: eine Ventileinheit mit zwei gekoppelten Ventilen;
- Fig. 2:: ein Antriebssystem mit vier Ventilen;
- Fig. 2a:: ein zweikreisiges Antriebssystem mit Druckspeicher;
- Fig. 3a:: einen Ventilblock mit Ventilabschaltmechanismus zwischen Nockenwelle und Ventil;
- Fig. 3b:: einen Nockenwellenverstellmechanismus mit zwei Konturen;
- Fig. 4a:: ein Regelverfahren mit vier aufeinander folgenden Ventilen;
- Fig. 4b:: eine Ventilhubvariation mit unterschiedlichen Steuerverfahren;
- Fig. 5:: ein Verfahren zur Druckpulsationssteuerung;
- Fig. 6:: eine Ausführungsform der Ventilsteuerungseinrichtung mit zusätzlicher Pumpe in vereinfachter, prinzipieller Darstellung mit nur zwei Motorventilen (wobei weitere, nicht dargestellte Motorventile entsprechend ausgestattet sein können) und zur Erläuterung von Maßnahmen zum Leckageausgleich, zur aktiven Entlüftung und zur Zylinder-Vollabschaltung.

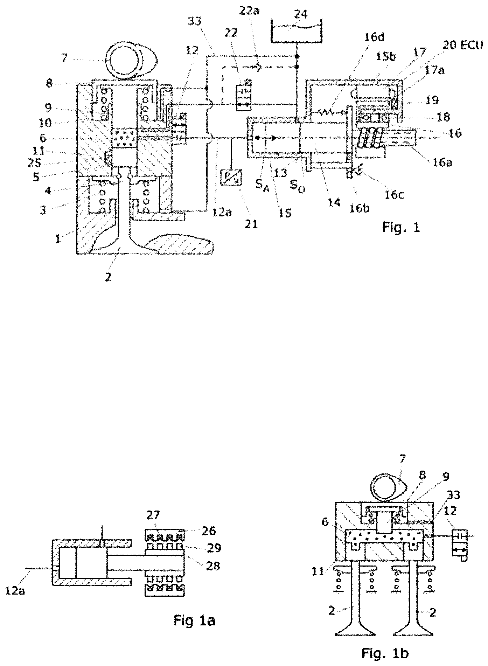

Fig. 1 zeigt den prinzipiellen Aufbau einer variablen Ventilsteuerung eines Einlass- oder Auslassgaswechselventils (nur ausschnittsweise dargestellt) eines Verbrennungsmotors, angebracht im Zylinderkopf 1 des Verbrennungsmotors. Im Zylinderkopf 1 wird ein Gaswechselventil 2 mit einer Ventilrückstellfeder 3 auf einen im Zylinderkopf gebildeten Ventilsitz gedrückt. Der Ventilschaft 4 ist in Wirkverbindung mit einem Ventilbetätigungskolben 5, der eine Ventilhydraulikkammer 6 begrenzt. Die Ventilhydraulikkammer wird ferner von einem Geberkolben 9 begrenzt, auf den eine Nockenwelle 7 über einen Mitnehmer 8 wirkt. Der Geberkolben 9 wird über eine Mitnehmerrückstellfeder 10 zurückgestellt. Hydraulikkomponenten der Ventilsteuerung, sowie die Kolben sind in einem Zylinderkopfaufsatz 11 angeordnet, der vom Zylinderkopf 1 trennbar ist. Der Hydraulikaufsatz 11 ist über eine Hydraulikleitung 12a und ein Schaltventil 12 mit einer Plungerkolben-Zylinder-Einheit 13 verbunden. Ein Arbeitsraum der Plungerkolben-Zylinder-Einheit 13 wird von einem Gehäuse 15 und einem darin axial verschiebbar angeordneten Plungerkolben 14 gebildet. Der Plungerkolben 14 wird von einem Antrieb, insbesondere mittels eines Kugel-Gewindetriebes 16 angetrieben, wobei der Kolben 14 mit einer Spindel 16a des Kugel-Gewindetriebs 16 fest verbunden ist. Alternativ ist auch eine Antriebslösung denkbar, bei der der Motor über ein Getriebe (z.B. Stirnradgetriebe) mit der Spindel verbunden ist oder versetzt angeordnet ist und über einen Zahnriemen mit dem Kugel-Gewindetrieb verbunden ist.

Der Plungerkolben 14 hat die Nullstellung s0 vor einem Schnüffelloch 15a, welches über eine Hydraulikleitung zu einem Hydraulikmittelreservoir 24 führt, so dass in dieser Stellung aus dem Reservoir Hydraulikflüssigkeit nachgesaugt werden kann. Bei sA ist der Plungerkolben 14 in einer Arbeitsstellung (gestrichelt dargestellt). Der Plungerkolben 14 wird über eine oder mehrere Rückstellfedern 16d zurückgeführt in die Nullstellung s0 in der er an einem Anschlag 16c anliegt. Der Plungerkolben 14 kann über den Kugelgewindetrieb über einen nachfolgend beschrieben Antrieb in beide Richtungen verstellt werden, so dass das der Arbeitsraum bzw. das Volumen im Arbeitsraum der Kolben-Zylinder-Einheit 13 entsprechend vergrößert bzw. verkleinert werden kann.

Der den Kugelgewindetrieb 16 antreibende Antrieb weist einen Elektromotor 17 (Stator + Rotor) mit entsprechender Lagerung 18 und Winkelgeber 19 auf. Im System ist ferner ein Druckgeber 21 vorgesehen, sowie ein weiteres 2/2 Schaltventil 22, das die Ventilhydraulikkammer 6 mit dem Hydraulikmittelreservoir 24 verbindet. Dieses Ventil 22 wird für Entlüftung des Systems und die Notbetriebssteuerung eingesetzt. Als Ersatz (in Fig. 1 gestrichelt gezeichnet) für das Schaltventil 22 kann auch ein einfaches Rückschlagventil 22a eingesetzt werden. Zur Hubmessung ist hier optional nur ein Ventilhubsensor 25 vorgesehen für ein Gaswechselventil. Dies dient zu einer weiteren Kalibrierung der Regelung (Druck-Hub-Zusammenhang bei verschiedenen Temperaturen) und Verbesserung der Ventilhubregelgüte. Für sehr genaue Regelanforderungen können auch mehrere Ventilhubsensoren eingesetzt werden, sofern die Kosten des Systems dies erlauben und die Anforderungen an die Genauigkeit der Regelung der Gaswechselventile dies erfordert. Dies kann insbesondere bei speziellen Brennverfahren der Fall sein.

Im Normalbetrieb ohne Ventilhubvariation wirkt die Nockenwelle über den Mitnehmer 8 und den Kolben 9 auf die Ventilhydraulikkammer 6 und das Ventil 12 ist geschlossen. In diesem Fall wird die Kraft der Nockenwelle über das in der Hydraulikkammer eingeschlossene Hydraulikmedium und den Kolben 5 auf das Gaswechselventil 2 übertragen. Vorzugsweise wird als Hydraulikmedium Öl verwendet, damit kein Dichtungsaufwand erforderlich ist und Motoröl verwendet werden kann für die Ventilhubbetätigung und die Motorschmierung. Das Öl ist druckbeaufschlagt, wobei der Druck durch die Plungerantriebseinheit aufgebaut und eingestellt wird, um Kompressionshübe zu vermeiden, so dass das Ventil der Nockenkontur möglichst direkt ohne Zeitverzug folgen kann. Dies ist erforderlich, um eine genauen Ventilhub zu erzielen. Es treten im Ventiltrieb Leckagen auf. Die Leckflüsse im Ventiltrieb werden über eine Rückführleitung 33 zum Hydraulikmittelreservoir 24 zurückgeführt. Über das Schaltventil 22 bzw. das Rückschlagventil 22a wird Hydraulikmedium, das durch Leckagen verloren ging, in der "Ventil geschlossen"-Stellung aus dem Hydraulikmittelreservoir 24 nachgeführt.

Im Betrieb mit Ventilhubvariation wird das Ventil 12 während des Nockenwellenhubes und eine entsprechende Bewegung des Geberkolbens 9 geöffnet und geschlossen. Volumen aus der Hydraulikkammer 6 wird durch entsprechende Bewegung des Plungerkolbens 14 vom Arbeitsraum der Kolben-Zylinder-Einheit 13 aufgenommen und wieder in die Ventilhydraulikkammer 6 zurückgeführt. Soll der Ventilhub im Vergleich zum von der Nockenwelle vorgegebenen Hub verkleinert werden, wird in der Ventilöffnungsbewegung der Kolben 14 zurückgefahren (dadurch wir das Volumen im Arbeitsraum der Kolben-Zylinder-Einheit 13 vergrößert) und wieder vorgefahren in der Ventilschließbewegung, damit das ursprüngliche Volumen bei Ventilschluss wieder in die Hydraulikkammer 6 zurückgeführt ist. Ist ein größerer Ventilhub als durch die Nockenwelle vorgegeben gewünscht, kann über die die Kolben-Zylinder-Einheit 13 zusätzliches Volumen in die Hydraulikkammer 6 gefördert werden, das bei "Ventil-Schließen" wieder entnommen wird.

Über die Steuerung des Kolbens der Kolben-Zylinder-Einheit 13 können beliebige Ventilöffnungskonturen, begrenzt im Wesentlichen nur durch die Dynamik der Plunger-Antriebseinheit, erzielt werden. Die Steuerung der Ventile und des Antriebes erfolgen mittels einer elektronischen Steuer- und Regeleinheit (ECU) 20. Die Steuerung des Volumens erfolgt über eine Hubregelung des Kolbens 14 der Kolben-Zylinder-Einheit über einen Winkelgeber 19 des Elektromotors. Auf den Druckgeber 21 kann in einer einfachen Variante verzichtet werden, indem über eine Strommessung des Phasenstroms auf das Antriebsmoment und den Druck in der Plungerkompressionskammer geschlossen wird. Die Strommessung kann auch im Fehlerfall (Ausfall des Druckgebers) zur Steuerung genutzt werden.

Das 2/2-Wege-Schaltventil 12 ist mit großem Querschnitt versehen, damit der Volumenstrom nicht gedrosselt wird und große Volumenströme erzielt werden können. Ein in einer von der Hydraulikkammer 6 zum Hydraulikmittelreservoir 24 führenden Hydraulikleitung ist ein weiteres Schaltventil 22 angeordnet. Das zweite 2/2-Wege-Schaltventil 22 hat die Funktion, dass aufgrund von Leckage fehlendes Volumen aus dem Hydraulikmittelreservoir 24 nachgefördert werden kann bzw. in den Ölkreislauf zurückgeführt werden kann und dient zur Entlüftung des Systems. Bei Ausfall der Antriebseinheit kann dieses Ventil 22 zudem als Saugventil genutzt werden, um das Volumen in die Ventilhydraulikkammer zu fördern. Das Ventil kann auch als einfaches nichtschaltbares Sperrventil 22a ausgeführt werden, das Volumenstrom nur in eine Richtung (vom Hydraulikmittelreservoir 24 zur Ventilhydraulikkammer 6) ermöglicht.

Der Druckgeber 21 dient zur Steuerung des Volumenstroms und Einstellung des Basisdruckes in der Ventilhydraulikkammer sowie zur Ermittlung von variabler Viskosität unter Einfluss von Temperatur. Die Steuerung erfolgt modellbasiert über Druck-Volumen-Kennlinien. Ein zusätzlicher Ventilhubgeber 25 dient zum Abgleich der Steuerung und Reglung und ist im Kreis in einem Ventil vorzugsweise vorgesehen und optional als Einsatz bei allen Ventilen. Insbesondere durch Temperatureinfluss ändern sich das Medieneigenschaften (Volumenstrom, Leckfluss). Dies kann mit dem Ventilhubsensor 25 ermittelt werden und somit die Präzision der Ventilhubregelung deutlich verbessert werden, da diese Veränderungen im Betrieb erkannt werden können. Zudem kann der Ventilhubsensor 25 für die Regelung genutzt werden und Druckschwingungen reduziert werden.

Im Notbetrieb (Ausfall Elektromotor,) ist Ventil 12 geschlossen und der Ventiltrieb wird im Vollhub betrieben. Über dass Ventil 22 bzw. 22a. wird Hydraulikmittel entsprechend der Leckage des Systems nachgefördert. Das System ist bei Abfall der Stromversorgung voll funktionsfähig. Der Ventilhub kann nicht mehr variiert werden.

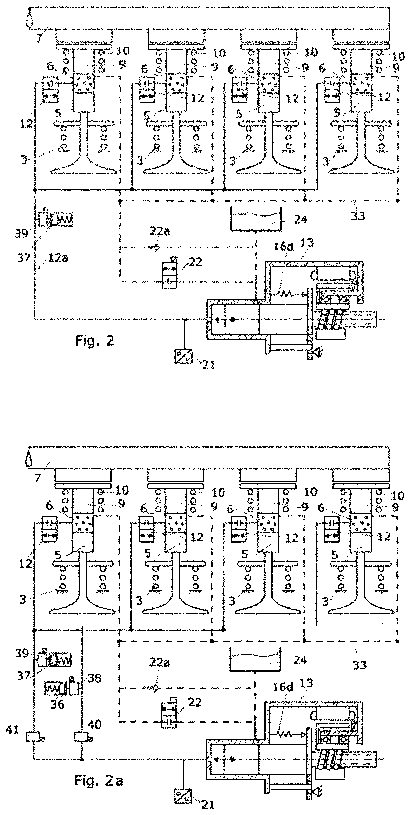

Fällt in einem zweiten Fehlerfall das Schaltventil 12 in der Offenstellung (z.B. Partikeleinfluss) aus, wird der Betrieb im variablen Ventilhub gestoppt. Das System wird dann nur noch im Vollhubbetriebsmodus betrieben. Der Motor bleibt dann in einer festen Position und wird nicht mehr im Sinne der Volumenaufnahme gesteuert und kompensiert nur Volumenströme zur Steuerung des Vollhubes und die anderen Ventile 22 werden geschlossen (siehe hierzu auch Fig. 2). Dies ist erforderlich, da bei einem sequentiellen Betrieb von Ventilen ein offenes Ventil eines nicht aktiven Schaltventils zu einer unerwünschten Ventilöffnung führen würde. Über Ventil 22 bzw. 22a wird Hydraulikflüssigkeit nachgefördert.

Fig. 1a zeigt eine alternative Ausführung der Plunger-Antriebseinheit, in dem die Motor-Getriebeeinheit durch einen Linearaktuator 26 ersetzt wird. Der Linearaktuator umfasst einen Stator mit Spulen 27 und einen Läufer 28 mit Permanentmagneten 29. Alternativ zu einem Linearaktuator kann auch ein Segmentmotor vergleichbar mit dem Ventiltriebsaktuator der DE 10 2006 013 100 A1 eingesetzt werden.

Fig. 1b zeigt eine alternative Ausführung des Hydraulikaufsatzes 11, in dem 2 oder mehr Ventile mit einer gemeinsamen Ventilhydraulikkammer 6 und einer Nockenwelle bestätigt werden können, wobei die Ventilhydraulikkammer über ein Schaltventil 12 mit der Plunger-Antriebseinheit verbunden ist.

Fig. 2 zeigt das gesamte Antriebssystem für 4 Ventile von 4 Zylindern. Die Ventileinheiten von 4 Ventilen sind jeweils über ein Schaltventil 12 mit der Plungerkolben-Zylinder-Einheit 13 verbunden. Eine Nockenwelle 7 betätigt die einzelnen Zylinder mit jeweils der gleichen Nockenwellenkontur. Alle Ventile werden über eine mittels einer Antriebseinheit betriebenen Plungerkolben-Zylinder-Einheit im Multiplexbetrieb gesteuert, d.h. die Ventilhubvariation kann sequentiell bzw. teilweise simultan erfolgen, was in der Regel kein

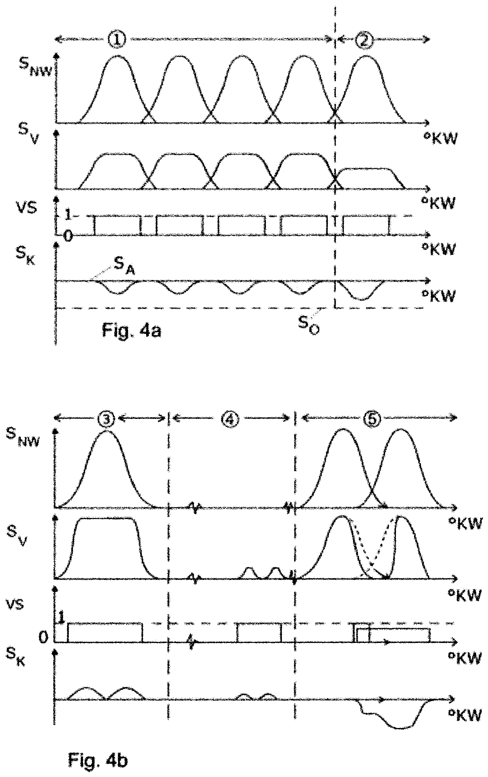

Problem ist, da die Ventilerhebungskurven der einzelnen Zylinder sequentiell aufeinander folgen. Zusätzlich ist für den gesamten Kreislauf (4 Ventile) ein Ventil 22 bzw. 22a für Nachförderung/ Entlüftung vorgesehen. Aus Redundanzgründen bietet sich an, 2 Ventile einzusetzen (22 + 22a). Auf die Steuerung wird in Fig. 4 näher eingegangen. Zusätzlich kann für das System ein Druckspeicher 37 eingesetzt werden in Zusammenhang mit einem weitern Schaltventil 39. Dieser Druckspeicher kann für den Notbetrieb genutzt werden, insbesondere beim Ausfall des Elektromotors, wenn kein Druck im System mehr vorhanden ist.

In Fig. 2a ist ein zweikreisiges Antriebssystem dargestellt, wobei für jeden Kreis ein Druckspeicher 36 bzw. 37 mit vorgeschaltetem Ventil 38 bzw. 39 vorgesehen ist. In den Leitungen von der Plungerkolben-Zylinder-Einheit 13 zu den Ventilen 12 ist je ein einem Hydraulikkreis zugeordnetes Trennventil 40 bzw. 41 vorgesehen. Damit ist der gleichzeitige Druckaufbau bzw. Druckabbau sich überschneidender Ventile möglich (Ventile aufeinanderfolgender Zylinder bzw. Einlass- und Auslassventil). So sind der einem ersten Hydraulikkreis zugeordnete erste und der dritte Zylinder und der einem zweiten Hydraulikkreis zugeordnete zweite und vierte Zylinder jeweils in einem separaten Druckkreis. Damit kann, mit entsprechendem Mehraufwand, die die Variabilität noch weiter verbessert werden. Zudem kann der Notbetrieb durch die Nutzung der schaltbaren Druckspeicher verbessert werden.

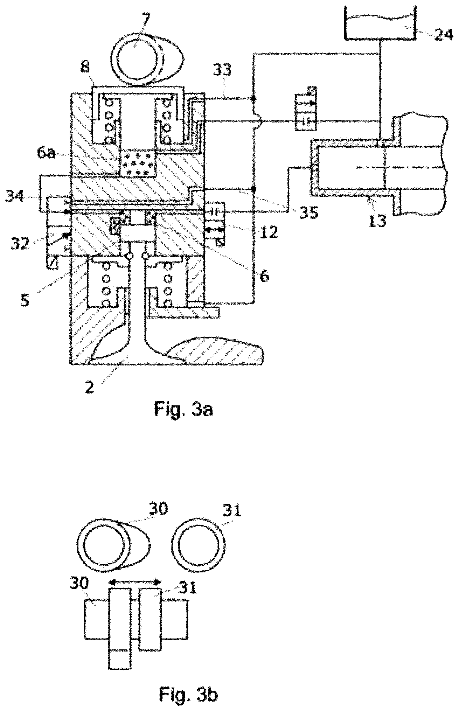

Fig. 3a zeigt eine hydraulische Lösung für die Umschaltung zwischen Nockenwelle und Betrieb mit abgekoppelter Nockenwelle. Die Nockenwelle 7 wird auf eine erste Nockenwellenhydraulikkammer 6a, die über eine Hydraulikleitung 33 und ein 3/2 Trennschaltventil 32 mit der Ventilhydraulikkammer 6 und dem Hydraulikmittelreservoir 24 verbunden ist. Wird das Trennschaltventil 32 geschlossen, ist die Nockenwelle von der Ventilhydraulikkammer entkoppelt. Das Hydraulikmedium in 6a wird dann bei Nockenwellenhub über eine Hydraulikleitung in das Hydraulikmittelreservoir 24 zurückgeführt und über das Ventil wieder nachgefördert. Damit wird das Gaswechselventil von der Nockenwellendruckbetätigung getrennt und kann ausschließlich über das Ventil 12 und die Plungerkolben-Zylinder-Einheit 13 bzw. den zugehörigen Antrieb gesteuert werden. Damit kann der Energiebedarf für den Teillastbetrieb minimiert werden, da nur kleine Volumenströme und Hubbewegungen erforderlich sind und keine Kompressionsverluste der Nockenwelle auftreten.

Fig. 3b zeigt eine verstellbare Nockenwellenkontur, wie in EP 2132418B1 (auf die hier auch zur Offenbarung bzw. näheren Erläuterung verwiesen wird) beispielsweise eingesetzt. Über einen Verstellmechanismus kann die Nockenwelle axial verschoben werden und die Nockenwellenkontur, die auf das Hydrauliksystem wirkt variiert werden. Dies hat den Vorteil, dass existierende mechanische Ventiltriebe übernommen werden können und die Hubvariation auf Basis zwei unterschiedlicher Nockenwellenkonturen erfolgt (Maximalhubkontur und Nullhub). Dies hat eine positive Auswirkung auf den elektrischen Leistungsbedarf sowie von großen als auch kleinen Hüben, da der Volumenstrom und somit der Leistungsbedarf minimiert werden kann. So würde eine Nockenwellenkontur mit Vollhub insbesondere für Maximallast eingesetzt werden und einen Nockenwellkontur mit Nullhub für kleine Hübe und Teillastbetrieb. Damit kann der Leistungsbedarf des Antriebssystems mit geringen Kosten minimiert werden und Ventiltriebssystem auch mit einer Standardbordnetzspannung von 12V betrieben werden.

Im Sinne eines geringen Leistungsbedarfes ist ein Elektromotor mit möglichst kleiner Trägheitsmasse (Innenläufer bzw. Innenläufer mit Doppelluftspalt) bzw. ein Linearaktuator mit geringer Läufermasse oder Segmentmotor (wie z.B. in der DE 102006013100 A1 der Anmelderin beschrieben, auf die hier zur Offenbarung und Beschreibung näherer Einzelheiten verwiesen wird) einzusetzen. Zudem ist eine hydraulische Übersetzung zwischen Ventilhydraulikkammer und Plungerhydraulikkammer sinnvoll, um die Gesamtträgheitsmasse und den Momentenbedarf/Kraftbedarf zu minimieren. Das hydraulische System ist vorzugsweise derart auszuführen, dass die gesamte Trägheitsmasse (Ventil + Plungerkolben-Zylinder Antriebseinheit) in Summe minimiert wird.

Fig. 4a illustriert das Steuerverfahren. Im oberen Bereich des Bildes ist der Nockenwellenhub sNW aufeinanderfolgender Ventile als Funktion des Kurbelwellenwinkels °kW dargestellt. Darunter ist der Hubverlauf des Ventil sV, die Schaltstellung der Schaltventile (1: offen/0: geschlossen) sowie der Kolbenhub sk der Plunger-Antriebseinheit dargestellt. Sobald der Hubverlauf der Nockenwelle von dem gewünschten Ventilhub abweichen soll, wird das Ventil geöffnet und der Plunger sk verstellt. Der Plunger arbeitet ausgehend von der Arbeitshubstellung sA und ist im Betrieb immer vor der Anfangsstellung s0. Das Volumen wird aufgenommen bis zum maximalen Hub und danach wieder zurückgeführt. Sobald der gewünschte Ventilhub wieder mit dem Nockenwellenventilhub übereinstimmt, kann das Ventil wieder geschlossen werden und der restliche Ventilhub wird durch die Nockenwelle vorgegeben. In Phase (1) ist dieser Ablauf für alle aufeinanderfolgenden Ventile gleich, so dass trotz Überschneidung der Nockenwellenverläufe die Plunger-Steuerung sequentiell erfolgen kann, da zu Beginn und Ende der Ventilerhebung kein Steuereingriff erforderlich ist. In Phase (2) wird der Hub Sv reduziert, damit erhöht sich die Kolbenbewegung, da mehr Volumen verschoben werden muss.

Im realen Betrieb ist eine entsprechende Vorsteuerung erforderlich, da sowohl die Schaltventile Totzeiten haben als auch der Druck zeitverzögert auf- und abgebaut wird. Dies ist in der Regelung zu berücksichtigen und ist in der schematischen Darstellung nicht genau ausgeführt.

Fig. 4b zeigt weitere Ventilhubvariationsmöglichkeiten und die entsprechende Steuerung. In Phase (3) ist ein größerer Ventilhub Sv als das Nockenwellenprofil gewünscht. Um dies zu erreichen wird das Ventil zu Beginn der Ventilerhebungskurve geöffnet und durch eine positive Kolbenbewegung sk der Ventilhub vergrößert. Dieses Verfahren ist vorteilhaft, um große Ventilöffnungsquerschnitte zur erreichen und bei max. Motorlast mehr Füllung im Zylinder zu erreichen.

In Phase (4) wird durch die Nockenwelle kein Hub erzeugt durch Nockenwellenabkopplung gemäß Fig. 3a bzw. Abkopplung der Nockenwelle gemäß Fig. 3b. Aufeinanderfolgende frei variable kleine Hübe. können durch kleine Hubbewegung des Kolbens mit minimaler Leistung erreicht werden.

In Phase (5) ist eine Besonderheit des Multiplexens darstellt, in dem zwei Schaltventile zweier aufeinanderfolgenden Ventile (z.B. Auslass und Einlass) zeitweise gleichzeitig geöffnet sind und somit eine Überschneidung der Ventilerhebungskurven vermieden wird. Das erste Ventil wird früh geschlossen und das zweite Ventil spät geöffnet und somit gewünschte Unterdrücke im Zylinder erreicht werden. Beide Ventilkurven können durch den Plunger gleichzeitig gesteuert.

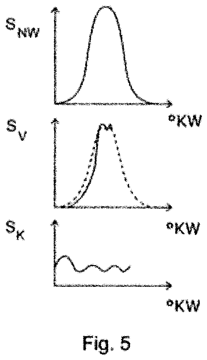

Fig. 5 zeigt zudem eine Druckpulsationssteuerung. Im oberen Bild ist die Nockenwellenerhebungskurve dargestellt. Aufgrund von dynamischen Effekten aufgrund der Kompressibilität des Hydraulikflüssigkeit kann es zu Druckschwingungen und Druckaufbautotzeiten und somit zu Ventilschwingungen und Winkelverzug kommen. Dieser Druckschwingung kann durch entsprechende Plunger-Steuerung sk entgegengewirkt werden.

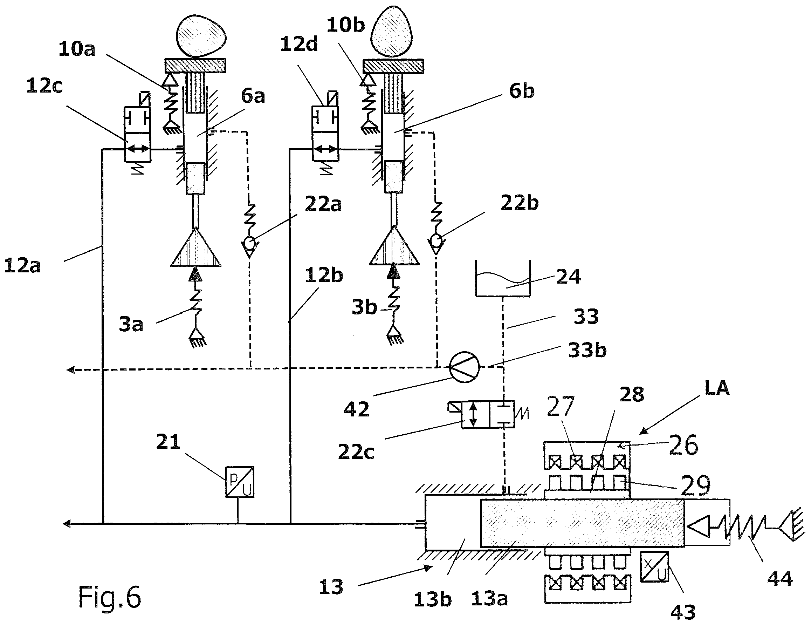

Die in Figur 6 dargestellte Ausführungsform einer Einrichtung zur variablen elektrohydraulischen Ventilsteuerung entspricht weitgehend der in Figur 1 dargestellten Ventilsteuerung. Im Unterschied zu dieser ist in den Arbeitsraum der Kolben-Zylinder-Einheit 13 mit den Ventilhydraulikkammern 6a, 6b verbindenden hydraulischen Leitungen 12a, 12b jeweils ein stromlos offenes (Steuer)Ventil 12c, 12d geschaltet. Ferner ist in einer die Kolben-Zylinder-Einheit 13 mit einem Hydraulikflüssigkeitsreservoir 24 verbindendenden Leitung 33 ein stromlos geschlossenes Schaltventil 22c angeordnet und in einer von der Leitung 33 abzweigenden hydraulischen Leitung 33b, die über Rückschlagventile 22a, 22b jeweils mit den Ventilhydraulikkammern 6a, 6b verbunden ist, eine Pumpe 42 angeordnet. Wie in Fig.1 ist in der von der Kolben-Zylinder-Einheit 13 zu den Ventilhydraulikkammern 6a, 6b führenden Leitung ein Druckgeber 21 angeordnet. Der Kolben 13a der Kolben-Zylinder-Einheit 13 ist mit einem Wegsensor 43 versehen und wird über einen Linearaktuator LA (bestehend aus 26-29, wie in Fig.1a beschrieben) betätigt, wie in Fig. 1a beschrieben.

Mit Hilfe der Pumpe 42 können über die Rückschlagventile 22a, 22b Leckageverluste ausgeglichen werden. Sinkt der Druck in den Ventilhydraulikkammern 6 unter das Druckniveau der Pumpe, setzt ein Fluidstrom über die Rückschlagventile ein. Die Rückschlagventile 22a, 22b sperren in Gegenrichtung, d.h. in Richtung der Pumpe fließt nie Volumen, auch nicht wenn während einer Modulation höhere Drücke entstehen als das Druckniveau der Pumpe 42. Insbesondere ist für jede Ventilhydraulikkammer 6a, 6b ein Rückschlagventil 22a bzw. 22b vorgesehen, damit zwischen den Ventilhydraulikkammern kein Querfluss entstehen kann (was bei Modulation an einem Ventil in der Grundkreisphase des Nockens sonst möglich wäre). Der Pumpendruck hält einen Mindestdruck in den Ventilhydraulikkammern aufrecht, wodurch das "hydraulische Gestänge" vorgespannt wird. Je höher der Mindestdruck ist, umso besser folgt der Ventilhub dem Nockenhub nach, wobei eine Reduktion der Kompressionsverluste erfolgt. Als Pumpe wird in einer einfachen Ausführungsform die Ölpumpe des Verbrennungsmotors eingesetzt und als Medium für den Ventiltrieb das Motoröl verwendet. Zur Reduzierung der Kompressionsverluste ist eine Ölpumpe mit einem höheren Druck z.B. 10bar vorteilhaft bzw. ein separater Ölkreislauf. Dies führt zu höherer Steuerzeitengenauigkeit (weniger Luft im Öl, steiferes System), jedoch auch höheren Systemkosten.

Bei geöffnetem Magnetventil 22c fährt der Linearaktor LA den Kolben 13 a, der Kolben-Zylinder-Einheit 13 zurück und erzeugt so durch Differenzdruck zur Hydraulikventilkammer 6 einen Volumenstrom in den Arbeitsraum 13b der Kolben-Zylinder-Einheit 13 bzw. bei Aktivierung des Linearaktuators zurück in die Hydraulikventilkammer. Dadurch wird der Ventilhub gesteuert. Eine Feder 44 unterstützt die Aktorbewegung und reduziert durch entsprechende Auslegung unter Berücksichtigung der anderen Federkräfte im System (Ventil- und Mitnehmerrückstellfeder 3, 10), die erforderliche Linearaktorkraft und reduziert somit den Leistungsbedarf. Zusätzlich können Leckageverluste direkt in der Kolben-Zylinder-Einheit 13 kompensiert werden, in dem Volumen aus der Kolben-Zylindereinheit in die Hydraulikventilkammer 6 durch Vorwärtsbewegung des Kolbens 13 über Betätigung des Linearaktuators gefördert wird.

Bei geöffnetem Magnetventil 22c und zugleich zumindest einem geöffneten Magnetventil 12c, 12d (Steuerventil(e)) an den Ventilhydraulikkammern setzt ein Volumenstrom ein, der von der Pumpe 42 bzw. alternativ über den Linearaktuator LA getrieben wird. Dies ist dann sinnvoll, wenn die Pumpe nur über den Verbrennungsmotor mechanisch angetrieben wird und bei Stillstand zur Entlüftung nicht eingesetzt werden kann. Über die Ventilhydraulikkammern 6a, 6b und die Steuerventile 12c, 12d, die Kolben-Zylinder-Einheit 13 und das dazu geöffnete Magnetventil 22c in den Behälter 24 kann auf diese Weise eine aktive Entlüftungsroutine durchgeführt werden. Durch die Entlüftung wird die Steuergenauigkeit verbessert, da das Hydraulikmedium (Öl) "steifer" bzw. weniger elastisch wird. Gleichzeitig ergibt sich eine Reduktion der Kompressionsverluste.

Für einen Notbetrieb bzw. Systemkomponentenausfall ist es sinnvoll, die Ventile 12c und 12d stromlos geöffnet auszuführen. Bei einem Ventilausfall kann somit das Volumen aus der Ventilhydraulikkammer in die Kolben-Zylindereinheit verdrängt werden. Dadurch ist sichergestellt, dass es zu keiner Kollision zwischen Gaswechselventil 2 und dem Motorkolben durch Volumenförderung in die Hydraulikkammer des betroffenen Ventils. Bei entsprechenden Sicherheitsvorkehrungen (z.B. Ventilhubmessung) kann das Ventil noch über die Kolben-Zylindereinheit gesteuert werden durch Volumenförderung über den Linearaktuator. Die anderen verbleibenden Ventile können in einem Notbetrieb noch ohne Einschränkung über das beschriebene Steuerverfahren ohne Einschränkung gesteuert werden.

Bei einem Systemausfall der Ventilsteuereinrichtung sind dann alle Ventile 12c, 12d offen und das Volumen aus der Ventilhydraulikkammer wird in die Ventilhydraulikkammer in die Kolben-Zylinder-Einheit bzw. gefördert. Die Hydraulikkammer wirkt dann wie eine Speicherkammer und fördert das Volumen wieder zurück in die Hydraulikkammer. Somit kann der Motor noch weiter betrieben werden. Leckageverluste werden über die Pumpe kompensiert.

Für eine Zylinderabschaltung des Motors kann es genügen, die Einlassventile des Zylinders (beide zugleich) hydraulisch abzuschalten. Hierfür kann das Magnetventil 22c geöffnet werden, in Verbindung mit geöffnetem Steuerventil 12c bzw. 12d. Der dem Zylinder zugeordnete Nocken schiebt dann das Hydraulikmedium über den Kolben 13a in den drucklosen Vorratsbehälter 24. Diese Art der Abschaltung ist nur eine von weiteren möglichen Abschaltungen, d.h. optional.

Bei der in Fig. 3a dargestellten Ausführung kommt zur Vollabschaltung ein 3/2 Magnetventil 32 zur Anwendung. Vorteilhaft kann eine Vollabschaltung auch mittels der Kolben-Zylinder-Einheit 13 erfolgen, wie nachfolgend anhand der Fig. 6 erläutert ist. Bei geschlossenem Magnetventil 22c verhält sich die Kolben-Zylinder-Einheit mit dem Kolben 13a und der Hilfsfeder 13c wie eine Speicherkammer und kann als solche zur Vollabschaltung von Ventilen bzw. bei Abschaltung beider Ventile zur Abschaltung des betr. Zylinders verwendet werden. Hierzu wird insbesondere folgende Steuerprozedur durchgeführt: Das Steuerventil 12c bzw. 12d des betreffenden Zylinders wird geöffnet, wenn der Nockenhub beginnt. Durch den Nockenhub wird Hydraulikfluid bewegt, was zur Druckerhöhung in der Ventilhydraulikkammer, der Kolben-Zylinder-Einheit und der dazwischenliegenden Hydraulikleitung führt. Der Kolben 13a wird dadurch gegen die Federkraft der Hilfsfeder 44 bewegt und speichert die von der Nockenwelle aufgebrachte Energie zwischen. Zusätzlich wird die hydraulische Energie über Energiewandlung des Linearaktuator in elektrische Energie umgewandet und in das Bordnetz gespeist und führt somit zu minimierten Verlusten. Dabei nimmt die Kolben-zylinder-Einheit den Hub des Nockens vollständig auf, was die gewünschte Vollabschaltung (Null-Hub der Motorventile) herbeiführt.

Mittels des Druckgebers 21 kann ermittelt werden, ob die Gefahr besteht, dass ein Motorventil öffnet. In diesem Fall kann durch geeignete Ansteuerung des elektrischen Aktors der Kolben-Zylinder-Einheit der Kolben in seiner Bewegung so unterstützt werden, dass das Motorventil nicht öffnet.

Bezugszeichen
- 1: Zylinderkopf
- 2: Gaswechselventil
- 3: Ventilrückstellfeder
- 4: Ventilschaft
- 5: Ventilbetätigungskolben
- 6a: Nockenwellenhydraulikkammer
- 6: Ventilhydraulikkammer
- 7: Nockenwelle
- 8: Mitnehmer
- 9: Geberkolben
- 10: Mitnehmerrückstellfeder
- 11: Zylinderkopfaufsatz mit Hydraulikkomponenten
- 12: 2/2 Schaltventil mit großem Querschnitt
- 12a: Hydraulikleitung
- 12b: Hydraulikleitung
- 12c: stromlos offenes Magnetventil
- 12d: stromlos offenes Magnetventil
- 13: Plunger-Kolben-Zylinder-Einheit
- 13a: Kolben
- 13b: Arbeitsraum
- 14: Plunger-Kolben
- 14a: Plunger-Kolben Rückstellfeder
- 15: Gehäuse
- 15a: Schnüffelloch
- 15b: Motorgehäuse
- 16: Kugelgewindetrieb
- 16a: Spindel Plunger-Kolbenzugstange
- 16b: Verdrehsicherung der Spindel
- 16c: Anschlagstellung des Kolbens
- 16d: Kolbenrückstellfeder
- 17: Elektromotor
- 17a: Rotor
- 18: Lagerung des Motor-Gewindetriebs
- 19: Winkelgeber
- 20: Steuer- Und Regeleinheit (ECU)
- 21: Druckgeber
- 22: 2/2 Sperrventil
- 22a: Rückschlagventil
- 22b: Rückschlagventil
- 22c: stromlos geschlossenes Magnetventil
- 23: Plungervolumen
- 24: Hydraulikmittelreservoir
- 25: Ventilhubsensor
- 26: elektrischer Linearaktuator
- 27: Stator des Linearaktuators mit Erregerspulen
- 28: Läufer des Linearaktuators mit Permanentmagneten
- 30: Nockenwellenkontur für großen Ventilhub
- 31: Nockenwellen ohne Kontur für Nullhub
- 32: 3/2 Umschaltventil
- 33: Hydraulikleitung
- 34: Hydraulikleitung
- 35: Hydraulikleitung
- 36: Druckspeicher
- 37: Druckspeicher
- 38: Ventil
- 39: Ventil
- 40: Trennventil
- 41: Trennventil
- 42: Pumpe
- 43: Wegsensor
- 44: Hilfsfeder
- 45: LA

- skW: Nockenwellenhub
- sV: Ventilhub
- vS: Ventilstellung des Schaltventils 22 ein/aus
- sk: Plungerhub
- s0: Anfangsstellung des Plungerkolbens
- sA: Arbeitsstellung des Plungerkolbens

## Patentansprüche

1. Variable elektrohydraulische Ventilsteuerung, mit jeweils einem Kolben (5), der zur Betätigung eines Gaswechselventils (12) einer Brennkraftmaschine, auf dieses einwirkend angeordnet ist, einer von diesem Kolben (5) begrenzten Ventilhydraulikkammer (6) und mit zumindest einer Kolben-Zylinder-Einheit (13), die über eine Hydraulikleitung (12a), in der ein Schaltventil (12) angeordnet ist, mit der Ventilhydraulikkammer (6) verbunden ist, wobei die Kolben-Zylinder-Einheit (13) einen Kolben (14) aufweist, **dadurch gekennzeichnet, dass** der Kolben (14) der Kolben-Zylinder-Einheit (13) von einem Antrieb, insbesondere Elektromotor angetrieben ist, wobei die Steuerung des Kolbens (14) mittels Wegsteuerung des Antriebssystems bzw. der Kolben-Zylinder-Einheit erfolgt, und dass bei der Steuerung eine Auswertung der Druck-Volumen-Kennlinie der Ventilhydraulikkammer mit Plunger zugrunde gelegt wird, und dass der Druck in der Arbeitskammer der Kolben-Zylinder-Einheit (13), der Ventilhydraulikkammer (6) oder in der die Arbeitskammer mit der Kolben-Zylinder-Einheit (13) mit der Ventilhydraulikkammer(6) verbindenden Hydraulikleitung (12a) mittels eines Drucksensors (21) oder über eine Strommessung des Phasenstromes des Antriebsmotors ermittelt wird, wobei die eine Kolben-Zylinder-Einheit (13) mehrere Ventile (2), insbesondere deren Ventilhübe und Steuerzeiten, im Multiplexverfahren sequentiell, simultan oder teilsimultan ansteuert.

2. Ventilsteuerung nach Anspruch 1, **dadurch gekennzeichnet, dass** der Antrieb einen Rotationsmotor (17) aufweist, der über ein Getriebe, insbesondere einen Kugel-Gewindetrieb (16), mit dem Kolben (14) der Kolben-Zylinder-Einheit (13) verbunden ist oder dass der Antrieb einen Linearmotor (26) aufweist.

3. Ventilsteuerung nach einem der vorhergehenden Ansprüche, **dadurch gekennzeichnet, dass** zumindest zwei gesteuerte Gaswechselventile (2) einen gemeinsamen Antrieb bzw. Motor aufweisen und/oder über ein Schaltventil (12) und Hydraulikleitung (12a) mit einer Kolben-Zylinder-Einheit verbunden sind.

4. Ventilsteuerung nach einem der vorhergehenden Ansprüche, **dadurch gekennzeichnet, dass** in der Hydraulikleitung (12a) pro gesteuertem Gaswechselventil, je ein Schaltventil (12) mit großem Querschnitt angeordnet ist.

5. Ventilsteuerung nach einem der vorhergehenden Ansprüche, **dadurch gekennzeichnet, dass** der Kolben (13a, 14) der Kolben-Zylinder-Einheit (13, LA) eine Kolbenrückstellfeder (16d,44) aufweist.

6. Ventilsteuerung nach einem der vorhergehenden Ansprüche, **dadurch gekennzeichnet, dass** die Volumensteuerung der Kolben-Zylinder-Einheit (13) zur Kompensation hydraulischer Druckschwingungen eingesetzt wird.

7. Ventilsteuerung nach einem der vorhergehenden Ansprüche, **dadurch gekennzeichnet, dass** zwischen der Ventilhydraulikkammer (6) und der Arbeitskammer der Kolben-Zylinder-Einheit (13) eine hydraulische Übersetzung vorgesehen ist.

8. Ventilsteuerung nach einem der vorhergehenden Ansprüche, **dadurch gekennzeichnet, dass** die Ventilhydraulikkammer (6) von einem weiteren Kolben begrenzt ist, der mittels einer mechanischen Einrichtung, insbesondere einer Nockenwelle (7) betätigbar ist.

9. Ventilsteuerung nach Anspruch 7 oder 8, **dadurch gekennzeichnet, dass** die mechanische Einrichtung, insbesondere Nockenwelle von der elektrohydraulischen Betätigungseinrichtung, insbesondere über ein 3/2 Trennventil oder einen Nockenwellenverschiebemechanismus, abkoppelbar ist.

10. Ventilsteuerung nach einem der vorhergehenden Ansprüche, **dadurch gekennzeichnet, dass** eine Einrichtung, insbesondere Ventileinrichtung (22), zur Entlüftung und/oder zum Notbetrieb des Systems vorgesehen ist.

11. Ventilsteuerung nach einem der vorhergehenden Ansprüche, **dadurch gekennzeichnet, dass** die Ventilhydraulikkammer (6) über eine Hydraulikleitung, mit einem steuerbaren Druckspeicher (36, 37) verbunden ist.

12. Ventilsteuerung, insbesondere nach einem der vorhergehenden Ansprüche, **dadurch gekennzeichnet, dass** zumindest einem Ventil eine Pumpe (42) zugeordnet ist, mit der Hydraulikmedium in die Ventilförderkammer(n) förderbar ist und dass das Hydraulikmedium mittels der Pumpe (42) über eine Ventileinrichtung, insbesondere Rückschlagventil(e) (22a, 22b), in die Ventilförderkammer(n) erfolgt.

13. Ventilsteuerung nach Anspruch 12 **dadurch gekennzeichnet, dass** zumindest einer Ventilförderkammer ein stromlos offenes Magnetventil vorgeschaltet ist.

14. Ventilsteuerung nach einem der Ansprüche 12 oder 13, **dadurch gekennzeichnet, dass** in eine von der Kolben-Zylinder-Einheit (13) zur Pumpe (42) und zu einem Vorratsbehälter (24) führenden Hydraulischen Leitung ein stromlos geschlossenes Magnetventil (22c) geschaltet ist.

15. Ventilsteuerung nach einem der Ansprüche 12 bis 14, **dadurch gekennzeichnet, dass** die Pumpe die Ölpumpe des Verbrennungsmotors ist, wobei die Pumpe einen Öldruck im Bereich von etwa 8-10 bar oder mehr aufweist und/oder dass ein separater Ölkreislauf vorgesehen ist.

16. Verfahren zur variablen elektrohydraulischen Steuerung von Gaswechselventilen von Brennkraftmaschinen, **dadurch gekennzeichnet, dass** einem Ventil-Hydraulikraum Hydraulikmedium mittels einer elektronisch steuerbaren Einrichtung zugeführt wird und aus dieser abgeführt wird, wobei mehrere Gaswechselventile im Multiplexverfahren sequentiell, simultan oder teilsimultan angesteuert werden.

17. Verfahren nach Anspruch 16, **dadurch gekennzeichnet, dass** zur Steuerung eine Auswertung der Druck-Volumen-Kennlinie vorgenommen wird, wobei der Druck mittels eines Drucksensors oder über eine Strommessung des Phasenstromes des Antriebsmotors ermittelt wird.

18. Verfahren zur Einhaltung eines Druckniveaus oder/und zum Leckageausgleich und/oder zum aktiven Entlüften einer Ventilsteuerung mit einer angetriebenen Kolben-Zylinder-Einheit, nach einem der Ansprüche 1 bis 17, **dadurch gekennzeichnet, dass** eine Pumpe vorgesehen ist, um den Ventilförderkammern gesteuert Hydraulikflüssigkeit aus einem Vorratsbehälter zuzuführen.

19. Verfahren zur Vollabschaltung von Einlassventilen einer Brennkraftmaschine, bei einer Ventilsteuerung mit einer angetriebenen Kolben-Zylinder-Einheit nach einem der vorhergehenden Ansprüche, **dadurch gekennzeichnet, dass** die Kolben-Zylinder-Einheit als Zwischenspeicher zur Speicher der von den Nockenwelle aufgebrachten Energie verwendet wird

## Claims

1. Variable electrohydraulic valve control, with a respective piston (5) which is arranged such that it acts on a gas exchange valve (12) of an internal combustion engine to actuate said gas exchange valve, a valve hydraulic chamber (6) delimited from this piston (5) and with at least one piston-cylinder unit (13) which is connected to the valve hydraulic chamber (6) via a hydraulic line (12a) in which a switch valve (12) is arranged, wherein the piston-cylinder unit (13) has a piston (14), **characterised in that** the piston (14) of the piston-cylinder unit (13) is driven by a drive, in particular by an electric motor, wherein the piston (14) is controlled by means of a path control of the drive system or of the piston-cylinder unit, and **in that** an evaluation of the pressure-volume characteristic of the valve hydraulic chamber with plunger is taken as a basis for the control, and **in that** the pressure in the working chamber of the piston-cylinder unit (13), in the valve hydraulic chamber (6) or in the hydraulic line (12a) connecting the working chamber with the piston-cylinder unit (13) with its valve hydraulic chamber (6) is determined by means of a pressure sensor (21) or via a current measurement of the phase current of the drive motor, wherein the one piston-cylinder unit (13) controls a plurality of valves (2), in particular the valve lifts and control times thereof, in a sequential, simultaneous or partly simultaneous manner in the multiplex method.

2. Valve control according to claim 1, **characterised in that** the drive has a rotation motor (17) which is connected to the piston (14) of the piston-cylinder unit (13) by a transmission, in particular by a ball-screw drive (16), or **in that** the drive has a linear motor (26).

3. Valve control according to any one of the preceding claims, **characterised in that** at least two controlled gas exchange valves (2) have a common drive or motor and/or are connected to a piston-cylinder unit by a switch valve (12) and hydraulic line (12a).

4. Valve control according to any one of the preceding claims, **characterised in that** a respective switch valve (12) having a large cross section is arranged in the hydraulic line (12a) per controlled gas exchange valve.

5. Valve control according to any one of the preceding claims, **characterised in that** the piston (13a, 14) of the piston-cylinder unit (13, LA) has a piston return spring (16d, 44).

6. Valve control according to any one of the preceding claims, **characterised in that** the volume control of the piston-cylinder unit (13) is used to compensate hydraulic pressure oscillations.

7. Valve control according to any one of the preceding claims, **characterised in that** a hydraulic transmission ratio is provided between the valve hydraulic chamber (6) and the working chamber of the piston-cylinder unit (13).

8. Valve control according to any one of the preceding claims, **characterised in that** the valve hydraulic chamber (6) is delimited by a further piston which can be actuated by a mechanical device, in particular by a camshaft (7).

9. Valve control according to claim 7 or claim 8, **characterised in that** the mechanical device, in particular a camshaft, can be uncoupled from the electrohydraulic actuating device, in particular by a 3/2 isolation valve or by a camshaft displacement mechanism.

10. Valve control according to any one of the preceding claims, **characterised in that** a device, in particular a valve device (22) is provided to vent, and/or for the emergency operation of, the system.

11. Valve control according to any one of the preceding claims, **characterised in that** the valve hydraulic chamber (6) is connected to a controllable pressure reservoir (36, 37) by a hydraulic line.

12. Valve control, in particular according to any one of the preceding claims, **characterised in that** associated with at least one valve is a pump (42), by which hydraulic medium can be conveyed into the valve conveying chamber(s), and **in that** the hydraulic medium can be introduced into the valve conveying chamber(s) by means of the pump (42) via a valve device, in particular by return valve(s) (22a, 22b).

13. Valve control according to claim 12, **characterised in that** a normally open solenoid valve is connected upstream of at least one valve conveying chamber.

14. Valve control according to any one of claims 12 or 13, **characterised in that** a normally closed solenoid valve (22c) is connected in a hydraulic line leading from the piston-cylinder unit (13) to the pump (42) and to a reservoir (24).

15. Valve control according to any one of claims 12 to 14, **characterised in that** the pump is the oil pump of the internal combustion engine, the pump having an oil pressure within a range of approximately 8 to 10 bar or more and/or **in that** a separate oil circuit is provided.

16. Method for the variable electrohydraulic control of gas exchange valves of internal combustion engines, **characterised in that** a valve hydraulic chamber is supplied with hydraulic medium by means of an electronically controllable device and is removed therefrom, and a plurality of gas exchange valves being controlled sequentially, simultaneously or partly simultaneously in the multiplex method.

17. Method according to claim 16, **characterised in that** the pressure-volume characteristic is evaluated for the control, the pressure being determined by means of a pressure sensor or via a current measurement of the phase current of the drive motor.

18. Method for maintaining a pressure level and/or for compensating leaks and/or for actively venting a valve control having a driven piston-cylinder unit, according to any one of claims 1 to 17, **characterised in that** a pump is provided to deliver hydraulic fluid in a controlled manner from a reservoir to the valve conveying chambers.

19. Method for the complete cut-off of inlet valves of an internal combustion engine, for a valve control having a driven piston-cylinder unit according to any one of the preceding claims, **characterised in that** the piston-cylinder unit is used as an intermediate store for storing the energy applied by the camshaft.

## Revendications

1. Commande de soupape électro-hydraulique variable comportant respectivement un piston (5), agencé fonctionnellement sur une soupape d'échange gazeux, pour l'actionnement d'une soupape d'échange gazeux (12) d'un moteur à combustion interne, une chambre hydraulique de soupape (6) délimitée par ledit piston (5) et avec au moins un ensemble piston-cylindre (13) qui est relié à la chambre hydraulique de soupape (6) par une conduite hydraulique (12a) dans laquelle est agencée une soupape de commande (12), où l'ensemble piston-cylindre (13) présente un piston (14), **caractérisée en ce que** le piston (14) de l'ensemble piston-cylindre (13) est entraîné par un mécanisme d'entraînement, en particulier par un moteur électrique, où la commande du piston (14) a lieu à l'aide d'une gestion à distance du système d'entraînement, respectivement de l'ensemble piston-cylindre, et l'on retient, lors de la commande, une évaluation de la courbe caractéristique pression-volume de la chambre hydraulique de soupape avec plongeur, et que la pression dans la chambre de travail de l'ensemble piston-cylindre (13), de la chambre hydraulique de soupape (6) ou dans la conduite hydraulique (12a) reliant la chambre de travail à l'ensemble piston-cylindre (13) et à la chambre hydraulique de soupape (6) est déterminée à l'aide d'un capteur de pression (21) ou par une mesure de courant du courant de phase du moteur d'entraînement, où l'ensemble piston-cylindre (13) actionne plusieurs soupapes (2), en particulier leurs courses et leurs temps de commande, en un procédé multiplexé de façon séquentielle, simultanée ou partiellement simultanée.

2. Commande de soupape selon la revendication 1, **caractérisée en ce que** le mécanisme d'entraînement présente un moteur rotatif (17) qui est relié par une transmission, en particulier un entraînement fileté à billes (16), au piston (14) de l'ensemble piston-cylindre (13) ou que le mécanisme d'entraînement présente un moteur linéaire (26).

3. Commande de soupape selon l'une des revendications précédentes, **caractérisée en ce qu'**au moins deux soupapes d'échange gazeux commandées (2) présentent un mécanisme d'entraînement, respectivement un moteur, commun et/ou sont reliées par une commande de soupape (12) et une conduite hydraulique (12a) à un ensemble piston-cylindre.

4. Commande de soupape selon l'une des revendications précédentes, **caractérisée en ce que** respectivement une commande de soupape (12) avec une grande section transversale est agencée dans la conduite hydraulique (12a) pour chaque soupape d'échange gazeux commandée.

5. Commande de soupape selon l'une des revendications précédentes, **caractérisée en ce que** le piston (13a, 14) de l'ensemble piston-cylindre (13, LA) présente un ressort de rappel de piston (16d, 44).

6. Commande de soupape selon l'une des revendications précédentes, **caractérisée en ce que** la commande volumétrique de l'ensemble piston-cylindre (13) est utilisée pour compenser des oscillations de pression hydraulique.

7. Commande de soupape selon l'une des revendications précédentes, **caractérisée en ce que** l'on prévoit un rapport de transmission hydraulique entre la chambre hydraulique de soupape (6) et la chambre de travail de l'ensemble piston-cylindre (13).

8. Commande de soupape selon l'une des revendications précédentes, **caractérisée en ce que** la chambre hydraulique de soupape (6) est délimitée par un autre piston qui est actionnable à l'aide d'un dispositif mécanique, en particulier un arbre à cames (7).

9. Commande de soupape selon la revendication 7 ou 8, **caractérisée en ce que** le dispositif mécanique, en particulier l'arbre à cames, est détachable du dispositif d'actionnement électro-hydraulique en particulier grâce à une soupape d'isolement 3/2 ou un mécanisme de coulissement d'arbre à cames.

10. Commande de soupape selon l'une des revendications précédentes, **caractérisée en ce que** l'on prévoit un dispositif, en particulier un dispositif de soupape (22), pour la purge et/ou pour le fonctionnement de secours du système.

11. Commande de soupape selon l'une des revendications précédentes, **caractérisée en ce que** la chambre hydraulique de soupape (6) est reliée par une conduite hydraulique à l'accumulateur de pression (36, 37) pouvant être commandé.

12. Commande de soupape selon l'une des revendications précédentes, **caractérisée en ce qu'**au moins une pompe (42) est rattachée à une soupape avec laquelle un fluide hydraulique peut être transporté dans la (les) chambre(s) de refoulement à soupape et que le fluide hydraulique parvient à l'aide de la pompe (42) par un dispositif de soupape, en particulier une (des) soupape(s) de non-retour (22a, 22b), dans la (les) chambre(s) de refoulement à soupape.

13. Commande de soupape selon la revendication 12, **caractérisée en ce qu'**au moins une soupape magnétique ouverte sans courant est rattachée en amont d'une chambre de refoulement à soupape.

14. Commande de soupape selon l'une des revendications 12 ou 13, **caractérisée en ce qu'**une soupape magnétique fermée sans courant (22c) est rattachée dans une conduite hydraulique partant de l'ensemble piston-cylindre (13) vers la pompe (42) et vers un réservoir de stockage (24).

15. Commande de soupape selon l'une des revendications de 12 à 14, **caractérisée en ce que** la pompe est la pompe à huile du moteur à combustion interne, où la pompe présente une pression d'huile dans une gamme d'environ 8-10 bar ou plus et/ou que l'on prévoit un circuit d'huile séparé.

16. Procédé pour la commande électro-hydraulique variable de soupapes d'échange gazeux (12) de moteurs à combustion interne, **caractérisé en ce qu'**un fluide hydraulique est amené à une chambre hydraulique de soupape à l'aide d'un dispositif à commande électronique et est évacué de celle-ci, où plusieurs soupapes d'échange gazeux sont actionnées en un procédé multiplexé de façon séquentielle, simultanée ou partiellement simultanée.

17. Procédé selon la revendication 16, caractérisé en ce l'on entreprend une évaluation de la courbe caractéristique pression-volume pour la commande, où la pression est déterminée à l'aide d'un capteur de pression ou par l'intermédiaire d'une mesure de courant du courant de phase du moteur d'entraînement.

18. Procédé pour le respect d'un niveau de pression et/ou pour la compensation de fuites et/ou pour purger de manière active une commande de soupape avec un ensemble piston-cylindre entrainé, selon l'une des revendications de 1 à 17, **caractérisé en ce que** l'on prévoit une pompe afin d'alimenter de façon commandée les chambres de refoulement à soupape en liquide hydraulique provenant d'un réservoir de stockage.

19. Procédé pour désactiver entièrement des soupapes d'admission d'un moteur à combustion interne lors d'une commande de soupape avec un ensemble piston-cylindre entraîné selon l'une des revendications précédentes, **caractérisé en ce que** l'ensemble piston-cylindre est utilisé en tant qu'accumulateur intermédiaire pour stocker l'énergie produite par l'arbre à cames.
